Europäisches Patentamt

(19) European Patent Office

Office européen des brevets

(11) Numéro de publication: **0 148 089**

**A2**

(12) **DEMANDE DE BREVET EUROPEEN**

(21) Numéro de dépôt: **84402712.8**

(22) Date de dépôt: **21.12.84**

(51) Int. Cl.⁴: **B 23 C 3/00**

(30) Priorité: **28.12.83 FR 8320946**

(43) Date de publication de la demande:
**10.07.85 Bulletin 85/28**

(84) Etats contractants désignés:
**AT BE CH DE GB IT LI NL SE**

(71) Demandeur: **SOCIETE DES ANCIENS
ETABLISSEMENTS L. GEISMAR
113bis, Avenue Charles de Gaulle
F-92200 Neuilly sur Seine(FR)**

(72) Inventeur: **Coisne, Jean-Claude
20bis, rue de la Frette
F-95370 Montigny-les-Cormeilles(FR)**

(74) Mandataire: **Durand, Yves Armand Louis et al,
Cabinet Z. Weinstein 20, Avenue de Friedland
F-75008 Paris(FR)**

(54) **Machine à reprofiler les rails usés.**

㊗ La présente invention concerne une machine à reprofiler les rails usés par fraisage.

Cette machine comprend essentiellement une première fraise (2) à axe incliné par rapport à la verticale de manière à attaquer tangentiellement la table de roulement (3) du champignon (4) du rail (5), une deuxième fraise (6) à axe vertical pour fraiser simultanément et tangentiellement le flanc usé (7) du champignon du rail, ainsi que des moyens de guidage (8) associés à chaque fraise et se composant d'une paire de galets obliques (10, 11) supportant le dessous et chaque côté du champignon du rail en amont de chaque fraise, et d'une autre paire de galets obliques opposés (10a, 11a) situés en dessous et de chaque côté du champignon du rail en aval de chaque fraise, tous ces galets étant montés par deux dans un étrier (12) pouvant coulisser verticalement sur un chariot (13) déplaçable horizontalement sur le bâti (9) de la machine.

Cette machine s'applique à la rectification du champignon de rails de longueur et de type quelconques, avec un rendement élevé.

_FIG. 3_

1

## Machine à reprofiler les rails usés.

La présente invention a essentiellement pour objet une machine très perfectionnée pour reprofiler les rails usés par fraisage.

On sait que les passages répétés de convois ferroviaires provoquent sur les rails des phénomènes d'usure, de mâtage et de refoulement de métal qui, au-delà de certaines valeurs, nécessitent le reprofilage des rails de la voie, ou bien leur remplacement.

Diverses machines pour raboter, poncer ou meuler les rails, et notamment le champignon du rail, ont déjà été proposées.

Il faut citer ici les machines susceptibles de travailler en roulant sur la voie ferrée et comportant un châssis de machine monté par l'intermédiaire d'essieux sur la voie.

D'un autre côté, il existait des machines de traitement des rails après que ceux-ci aient été démontés. Ces machines permettaient le rabotage ou le meulage d'un rail préalablement bridé sur une table déplaçable, de sorte qu'on était limité sur le plan de l'encombrement, et que ces machines ne pouvaient usiner que des rails unitaires, les uns après les autres, et non pas usiner en continu des rails d'une longueur très grande et quelconque. De telles machines étaient donc déficientes sur le plan du rendement et du coût de reprofilage des rails.

On connaît également des machines susceptibles d'usiner la partie supérieure du champignon du rail au moyen d'une ou plusieurs fraises. Mais les outils de fraisage étaient le plus souvent à axe horizontal et la fraise "roulait" sur le rail lors de son avancement, ce qui produisait des facettes ou des ondulations sur le champignon du rail. En d'autres termes, le profil rectifié du rail n'était pas parfaitement rectiligne, et, d'une manière générale, il convenait absolument après le fraisage ou le meulage, de poncer le champignon du rail pour en quelque sorte effacer les facettes. Comme on le comprend, cela augmente considérablement le temps de traitement du rail et est bien sûr très coûteux.

La présente invention a pour but de remédier à tous les inconvénients ci-dessus inhérents aux machines antérieurement connues, en proposant une machine très perfectionnée de reprofilage des rails usés par fraisage, cette machine permettant notamment un défilement et une régénération à grande vitesse et en continu de rails d'une longueur quelconque, et cela sans être gêné par des impératifs de manutention à l'entrée et à la sortie de la machine, laquelle permet en outre d'obtenir après fraisage des rails parfaitement rectifiés, complètement dépourvus de facettes, et ne nécessitant aucune opération complémentaire de finissage.

A cet effet, l'invention a pour objet une machine à reprofiler les rails usés et du type comprenant essentiellement au moins une fraise susceptible d'effectuer le reprofilage d'au moins une partie du champignon du rail, ainsi que des moyens, tels que des galets par exemple, assurant le guidage et le maintien en position du rail lors de l'opération de fraisage, cette machine étant caractérisée par la combinaison d'une première fraise à axe incliné par rapport à la verticale de manière à attaquer tangentiellement la partie supérieure ou de roulement du champignon du rail, et d'une deuxième fraise à axe vertical pour fraiser simultanément et tangentiellement le flanc usé du champignon du rail, tandis que les moyens de guidage associés à chaque fraise sont constitués par une paire de galets obliques situés en-dessous et de part et d'autre du champignon du rail en amont de chaque fraise, et par une autre paire de galets obliques situés en-dessous et de part et d'autre du champignon du rail en aval de chaque fraise, les deux galets obliques situés d'un côté du rail et associés à chaque fraise de même que les deux galets obliques opposés situés de l'autre côté du rail étant montés de manière verticalement et horizontalement déplaçables et réglables sur le bâti de la machine.

Ainsi, comme on le comprend déjà, le rail est reprofilé par fraisage de la table de roulement et du flanc du champignon du rail en une seule passe, ce reprofilage ne laissant subsister aucune facette qui serait préjudiciable au confort et à la tenue du matériel roulant sur ces rails, essentiellement grâce au fait que la fraise destinée au reprofilage de la table de roulement est disposée de façon à attaquer le rail tangentiellement et que son axe a été incliné à cet effet. D'un autre côté, à chacune des deux fraises, sont associées respectivement deux paires de galets réglables respectivement en amont et en aval de la fraise, ce qui permettra avantageusement de maintenir le rail en position d'une façon idéale et apte à permettre un usinage régulier et parfait lors du défilement du rail devant la fraise à axe incliné rectifiant la table de roulement du rail et la fraise à axe vertical rectifiant le flanc du champignon du rail.

Suivant une autre caractéristique de la machine selon l'invention, le groupe de deux galets obliques d'un côté du rail et le groupe de deux galets opposés de l'autre côté du rail, sont respectivement montés fous dans une pièce en forme d'étrier dont ils font saillie, laquelle pièce est montée verticalement coulissante sur un chariot déplaçable horizontalement et perpendiculairement au rail.

Ainsi on comprend qu'à chaque fraise, sont associés, d'un côté et de l'autre du rail, deux galets solidaires d'un chariot et qui, grâce à ce chariot, peuvent être réglés tant dans le plan horizontal que dans le plan vertical.

Selon une autre caractéristique de l'invention, la pièce en forme d'étrier coulisse sur un montant vertical solidaire de chaque chariot, tandis que les deux chariots associés à chaque fraise sont montés coulissant sur des tiges horizontales solidaires du bâti de la machine.

On précisera encore ici que chaque chariot est actionnable au moyen d'un vérin solidaire du bâti, tandis que la pièce en forme d'étrier de chaque chariot est verticalement actionnable par un vérin solidaire du chariot.

Suivant encore une autre caractéristique de l'invention, chaque pièce en forme d'étrier est verrouillable sur le montant vertical précité par l'intermédiaire d'une came excentrée coopérant avec ladite pièce et associée à un moyen de blocage, tel qu'un frein à disque par exemple.

On notera encore ici que chaque pièce formant étrier est constamment sollicitée en position basse par un ressort ou analogue attelé directement ou non à la came excentrée précitée.

La machine selon l'invention est encore caractérisée par le fait qu'au moins une butée réglable est associée au vérin de commande en translation horizontale de chaque chariot pour permettre son réglage en position horizontale, tandis qu'au moins une autre butée réglable est prévue au niveau de la came excentrée.

Suivant une réalisation préférée, la came excentrée est portée à l'extrémité d'un axe tourillonnant sur le chariot et dont l'autre extrémité est cannelée et porte un manchon auquel est associé un disque coopérant avec un corps de frein solidaire du chariot, tandis que la butée réglable citée en dernier lieu coopère avec ledit manchon.

Selon encore une autre caractéristique de l'invention, des moyens de butée réglables, tels que vis ou analogues, sont agencés de préférence au niveau de chaque galet entre le chariot et la pièce en forme d'étrier qui lui est associée, de façon à encaisser les réactions latérales du rail sur chaque galet.

Il sera encore précisé ici que tous les galets obliques montés par paires dans une pièce en forme d'étrier et soutenant la partie inférieure du champignon du rail sont inclinés d'environ 45° par rapport à la verticale, tandis que la fraise attaquant la partie supérieure du champignon du rail est inclinée d'environ 20° par rapport à la verticale.

Suivant encore une autre caractéristique de l'invention, la partie d'attaque tangentielle de chaque fraise est pourvue d'une pluralité de plaquettes rapportées en carbure.

La machine de l'invention comporte également un train de galets d'entraînement du rail à profiler, notamment en amont et en aval de l'ensemble constitué par les deux fraises, au moins les galets situés en amont de la première fraise et au-dessus du rail étant réglables en hauteur.

Mais d'autres caractéristiques et avantages de l'invention apparaîtront mieux dans la description détaillée qui suit et se réfère aux dessins annexés, donnés uniquement à titre d'exemple, et dans lesquels :

- la figure 1 est une vue schématique en élévation et de face d'une machine conforme aux principes de l'invention;

- la figure 2 est une vue de dessus très schématique des outils de fraisage et des moyens de guidage au défilement du rail;

- la figure 3 est une vue en bout de la machine, suivant la flèche III de la figure 1;

- la figure 4 est une vue similaire à la figure 3, mais montrant seulement, à plus grande échelle et en coupe, l'un des chariots avec ses galets de guidage et de maintien en position du rail;

- la figure 5 est une vue de dessus de ce chariot, suivant la flèche V de la figure 4;

- la figure 6 est une vue partielle en coupe et à grande échelle de la fraise destinée à usiner la table de roulement du rail; et

- la figure 7 est une vue similaire à la figure 6, mais montrant la fraise destinée à usiner le flanc ou le rayon extérieur du rail.

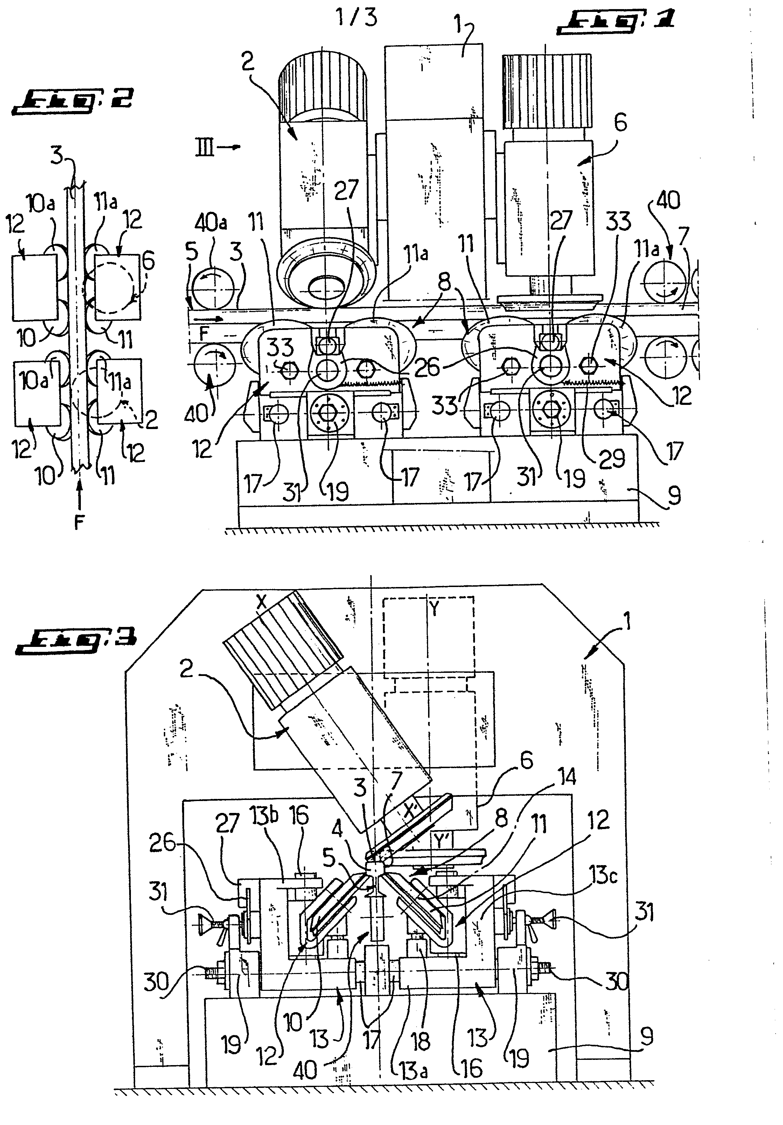

Suivant un exemple de réalisation, et en se reportant plus particulièrement aux figures 1 à 3, une machine à reprofiler les rails usés selon l'invention comprend essentiellement deux outils de fraisage solidaires d'un portique 1, de part et d'autre de celui-ci, et à savoir une première fraise 2 dont l'axe X-X' est incliné par rapport à la verticale de manière à attaquer tangentiellement la table de roulement 3 du champignon 4 d'un rail 5, et une deuxième fraise 6 à axe Y-Y' vertical pour fraiser tangentiellement la partie latérale ou flanc usé 7 du champignon 4 du rail, les deux fraises 2 et 6 étant disposées l'une derrière l'autre dans le sens longitudinal du rail, tandis que des moyens de guidage avec galets, repérés d'une manière générale en 8 et solidaires du bâti 9 de la machine, sont prévus pour guider et maintenir par le dessous le rail lors de son défilement devant les fraises 2 et 6 usinant la partie supérieure de ce rail.

La fraise 2 est inclinée par rapport à la verticale d'un angle d'environ 20° de façon à fraiser la table de roulement 3 du champignon 4 du rail avec un effet tangentiel à la surface à usiner, comme on le voit bien sur la figure 6. Ainsi, le dessus du champignon sera avantageusement fraisé en une seule passe et avec une seule fraise, ce qui permettra une coupe peu sujette à vibration et surtout ne provoquant aucune facette sur le rail.

Les moyens de guidage 8 respectivement associés à chaque fraise 2 et 6 sont identiques et comprennent chacun :

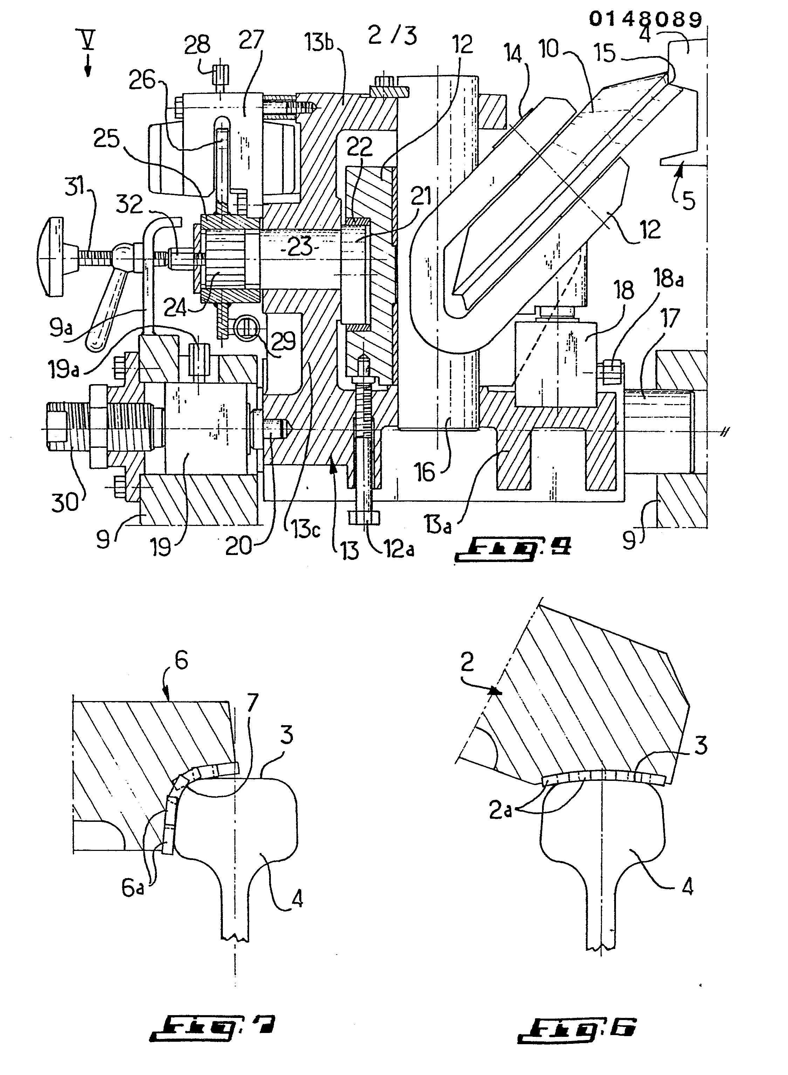

- une paire de galets obliques 10, 11 situés en dessous et de part et d'autre du champignon du rail, en amont de chaque fraise, comme on le voit bien sur les figures 1 et 2 où le sens de défilement du rail a été matérialisé par la flèche F;

- et une autre paire de galets obliques 10a, 11a situés en dessous et de part et d'autre du champignon 4 du rail en aval de chaque fraise 2, 6.

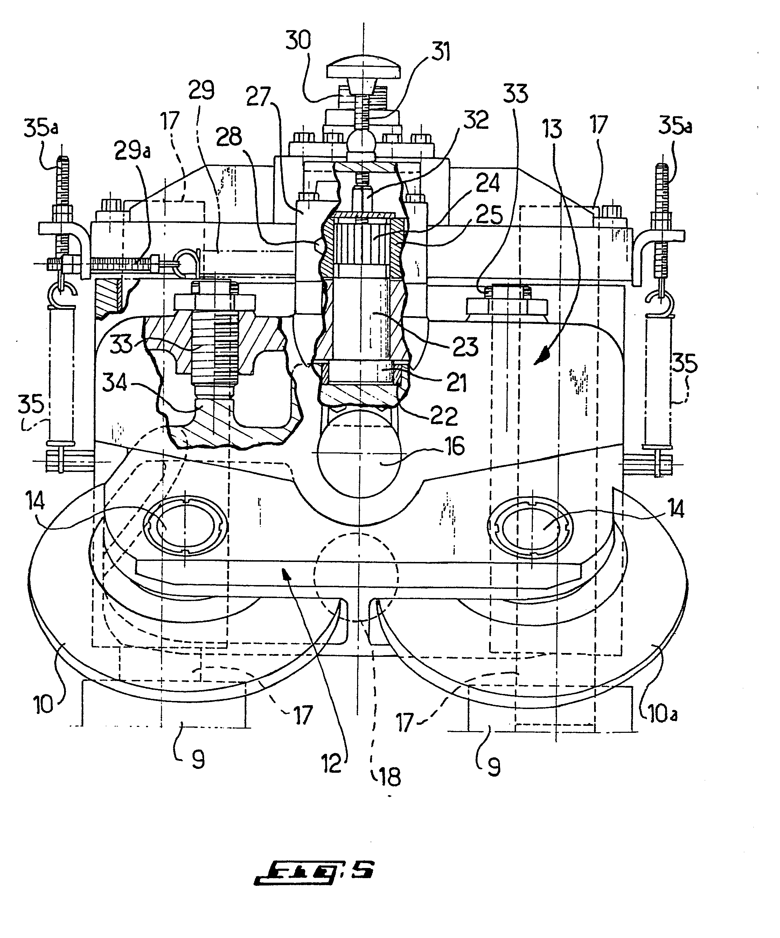

Les deux galets obliques 10, 10a situés sous chaque fraise d'un même côté du rail sont tous les deux montés fous dans une pièce en forme d'étrier 12 solidaire d'un chariot 13 bien visible sur les figures 3 et 4, ledit chariot étant monté déplaçable horizontalement sur le bâti 9 de la machine, c'est-à-dire perpendiculairement au rail 5.

Les groupes de galets obliques opposés 11, 11a situés de l'autre côté du rail sont également respectivement montés fous dans un étrier 12 solidaire d'un chariot 13 déplaçable sur le bâti 9 de la machine.

Ainsi, comme on le comprend en se reportant à la vue schématique de la figure 2, les étriers 12, et donc les chariots 13 forment quatre unités ou plus précisément deux paires d'unités opposées, chaque chariot comportant deux galets 10, 10a ou 11, 11a.

Comme il apparaît clairement sur les figures 3, 4 et 5, les galets 10, 10a, et 11, 11a sont montés fous sur des axes 14 entre les deux flasques de l'étrier 12, et lesdits galets font saillie de l'étrier pour prendre appui sur l'arête inférieure et extérieure 15 du champignon 4 du rail.

Chaque étrier 12 est monté verticalement coulissant sur un montant, une tige ou analogue 16 solidaire d'un chariot 13. On remarquera ici que chaque étrier 12 et par conséquent les galets associés à cet étrier sont inclinés d'environ 45° par rapport à la verticale.

encaissées.

Si l'on se reporte maintenant aux figures 6 et 7, on voit que les fraises 2 et 6 de la machine selon l'invention sont pourvues chacune, au niveau de leur surface de travail tangentielle, d'une pluralité de plaquettes rapportées en carbure 2a, et 6a. Ainsi, les plaquettes peuvent être facilement remplacées si besoin est, de façon à permettre un usinage parfait du rail.

Revenant à la figure 1, on voit qu'en amont et en aval de l'ensemble des deux fraises 2 et 6, est prévu un train de galets ou rouleaux 40 d'entraînement du rail 5 à usiner. Ces galets prennent respectivement appui sur le champignon et le patin du rail, de sorte que celui-ci, quelle que soit sa longueur et quelles que soient ses dimensions en section transversale, est toujours parfaitement entraîné et guidé à l'entrée et à la sortie des fraises. De préférence, les rouleaux inférieurs seuls sont moteurs pour assurer l'avance du rail par friction sur le patin. Les rouleaux supérieurs 40a situés en amont de la fraise 2 et au-dessus du rail 5, sont avantageusement réglables en hauteur pour pouvoir s'adapter parfaitement au rail à usiner et former ainsi une butée de référence supérieure. On comprend qu'on peut ainsi faire varier et ajuster la profondeur de passe.

On décrira maintenant brièvement comment s'effectue le réglage en position verticale et horizontale des galets 10, 10a et 11, 11a. Ce réglage se commande par les vérins hydrauliques 18 de positionnement vertical des galets, et par les vérins hydrauliques 19 respectivement associés à chaque chariot de chaque côté du rail.

Pour ce qui est du réglage horizontal, on agit sur les vis de butée 30, soit du côté droit, soit du côté gauche du rail pour la référence de largeur, de façon que le rail soit ainsi parfaitement guidé latéralement pendant le fraisage lors du défilement. Notons ici, comme on l'a expliqué en détail précédemment, qu'après réglage des vis de butée 30, on termine le blocage en actionnant la vis de butée 31.

Le réglage vertical s'effectue de la façon suivante. Les vérins hydrauliques 18, sont actionnés d'un côté et/ou de l'autre côté du rail jusqu'à ce que les galets se trouvent à la position voulue, ce après quoi l'arrivée d'huile dans les vérins est arrêtée, ce qui permet de réaliser un blocage hydraulique. En outre le frein 27 est mis en action par alimentation en fluide hydraulique, ce qui immobilise le plateau 26 et par conséquent la came excentrée 21 qui bloque mécaniquement l'étrier 12. On remarquera ici que lors du déplacement de cet étrier le long du montant vertical 16 pour procéder au réglage, la came 21 tourne à l'encontre de la force du ressort 29 lorsque l'étrier 12 monte, et dans le sens de cette force, lorsque l'étrier 12 descend sur le montant 16. Revenant à la question du réglage horizontal des chariots 13, on précisera encore que des ressorts 35 rappellent constamment ledit chariot vers la gauche de la figure 3, c'est-à-dire en direction de la partie du bâti 9 comportant les vérins 19.

La tension des ressorts 35 est réglable par une tige filetée comme on l'a montré en 35a sur la figure 5, de même que la tension du ressort 29, comme on le voit en 29a. On précisera encore que la course verticale de chaque étrier 12 est réglable par une vis de butée 12a, et que les vérins 18 et 19 sont équipés, comme connu en soi, de raccords 18a, 19a permettant l'arrivée et le retour du fluide hydraulique.

Il convient de remarquer ici que les galets 10,10a, 11, Comme on l'a expliqué précédemment, deux chariots opposés tels que 13 sont prévus en dessous de chaque fraise 2, 6 et conformément à la réalisation représentée, les deux chariots associés à chaque fraise sont montés coulissant sur des tiges horizontales 17 solidaires du bâti 9.

Comme on le voit sur les figures 3 et 4, chaque chariot 13 présente grossièrement en section transversale la forme d'un U couché dont on a montré en 13a la branche inférieure, en 13b la branche supérieure et en 13c la base.

Le montant vertical 16 sur lequel est monté incliné et coulissant l'étrier 12 est fixé entre les branches 13a et 13b, un vérin 18 étant solidaire de la branche 13a de façon à permettre l'actionnement vertical de l'étrier 12 le long du montant 16.

Un autre vérin 19 monté sur le bâti 9 agit par sa tige 20 sur la partie basse du chariot 13 de façon à permettre son actionnement dans le plan horizontal par coulissement le long des tiges 17.

Le maintien à la position verticale désirée de chaque étrier 12 est assuré par un système à came excentrée qui sera décrit en détail ci-après.

Une came excentrée 21 pouvant tourner et se débattre dans une rainure 22 ménagée dans l'étrier 12 est portée à l'extrémité d'un axe 23 tourillonnant dans la base 13c du U formant le chariot 13. L'autre extrémité de l'axe 23 est cannelée, comme on l'a montré en 24, et porte un manchon 25 auquel est associé un disque ou plateau 26 coopérant avec un corps de frein 27 solidaire du chariot 13 et raccordé à une source de fluide hydraulique au moyen d'une conduite repérée schématiquement en 28.

Ainsi, la came excentrée 21 et le disque 26 sont solidaires en rotation et cet ensemble est sollicité par un ressort 29 ancré entre le manchon 25 et le bâti 9, et qui rappelle constamment l'étrier 12 en position basse, c'est-à-dire à l'encontre de la force impartie par le vérin 18.

Une vis de butée 30 est associée au vérin 19 de commande en déplacement horizontal du chariot 13, de façon à permettre le réglage précis en position horizontale dudit chariot, et cela de chaque côté du rail.

Au-dessus de la vis de butée 30, et au niveau du système à came excentrée 21, est prévue une autre vis de butée 31 qui traverse un élément 9a du bâti 9 et peut prendre appui en 32 sur l'équipage constitué par le système à came excentrée et le manchon 25. Ainsi, lorsqu'on aura procédé au réglage à l'aide de la vis 30, on pourra rattraper le jeu résultant de ce réglage à l'aide de la butée réglable 31 pour ainsi permettre un maintien et une immobilisation parfaite du chariot 13, ce qui est absolument indispensable, puisque les galet obliques 10, 10a et 11, 11a doivent être positionnés très précisément et très rigidement sur l'arête 15 du champignon 4 du rail.

On comprend donc de la description qui précède que tous les galets sont réglables par deux horizontalement et verticalement pour pouvoir s'adapter très précisément à chaque dimension de rail, et cela de façon à permettre une opération de fraisage parfaite.

Comme on le voit mieux sur la figure 5, deux vis de butée 33 solidaires du chariot 13 et respectivement agencées au niveau de chaque galet 10, 10a ou 11, 11a, prennent appui sur l'étrier 12 qui comprend à cet effet des éléments de butée 34. Ainsi, les réactions latérales du rail 5 sur chaque galet 10, 11 seront efficacement

11a prennent appui sur la base du champignon 4 du rail qui n'a pas été endommagée, de sorte qu'on est certain d'avoir une référence aussi rectiligne que possible. En outre, le rail 5 sera maintenu latéralement en butée contre les galets 11, 11a situés du côté où le rail est régénéré et constituant ainsi des butées de référence latérale, tandis que les galets 10, 10a situés du côté opposé du rail pourront pousser le champignon du rail contre les galets 11, 11a.

On a donc réalisé suivant l'invention une machine à reprofiler les rails par fraisage qui est particulièrement fiable, qui permet de traiter des rails de longueur infinie et de différents types, qui possède un rendement très élevé et qui confère aux rails usinés un état de surface parfait et totalement dépourvu de facettes ou de défauts lontigudinaux.

Bien entendu, l'invention n'est nullement limitée au mode de réalisation décrit et illustré qui n'a été donné qu'à titre d'exemple.

C'est ainsi que, outre les galets 40 d'entraînement et de guidage du rail à usiner, on prévoit d'autres galets entre les deux fraises 2 et 6 ainsi qu'à l'entrée et à la sortie du châssis de guidage, ce qui a encore pour effet d'assurer un guidage et un maintien en position parfaits du rail à usiner.

Par ailleurs, des moyens de détection des défauts du champignon du rail peuvent être associés aux galets 40a pour minimiser la quantité de métal enlevé sur le dessus du rail.

L'invention comprend tous les équivalents techniques des moyens qui ont été décrits et leurs combinaisons si celles-ci sont effectuées suivant son esprit.

Revendications

1. Machine à reprofiler les rails usés et du type comprenant essentiellement au moins une fraise susceptible d'effectuer le reprofilage d'au moins une partie du champignon (4) du rail (5), ainsi que des moyens (8), tels que des galets par exemple, assurant le guidage et le maintien en position du rail (5) lors de l'opération de fraisage, caractérisée par la combinaison d'une première fraise (2) à axe (X-X') incliné par rapport à la verticale de manière à attaquer tangentiellement la partie supérieure ou de roulement (3) du champignon du rail, et d'une deuxième fraise (6) à axe (Y-Y') vertical pour fraiser simultanément et tangentiellement la partie latérale usée (7) du champignon du rail, tandis que les moyens de guidage (8) associés à chaque fraise (2,6) sont constitués par une paire de galets obliques (10,11) situés en dessous et de part et d'autre du champignon(4) du rail (5) en amont de chaque fraise, et par une autre paire de galets (10a, 11a) situés en dessous et de part et d'autre du champignon du rail en aval de chaque fraise, les deux galets obliques (10, 10a) situés d'un côté du rail (5) et associés à chaque fraise de même que les deux galets obliques (11, 11a) opposés situés de l'autre côté du rail étant montés de manière verticalement et horizontalement déplaçables et réglables sur le bâti (9) de la machine.

2. Machine selon la revendication 1, caractérisée en ce que le groupe de deux galets obliques (10, 10a) situés d'un côté du rail et le groupe de deux galets opposés (11, 11a) situés de l'autre côté du rail, sont respectivement montés fous dans une pièce en forme d'étrier(12) dont ils font saillie, laquelle pièce (12) est montée verticalement coulissante sur un chariot (13) déplaçable horizontalement et perpendiculairement au rail.

3. Machine selon la revendication 1 ou 2, caractérisée en ce que la pièce en forme d'étrier (12) coulisse sur un montant vertical (16) solidaire de chaque chariot (13), tandis que les deux chariots (13) associés à chaque fraise (2, 6) sont montés coulissants sur des tiges horizontales (17) solidaires du bâti (9).

4. Machine selon l'une des revendications 1 à 3, caractérisée en ce que chaque chariot (13) est actionnable au moyen d'un vérin (19) solidaire du bâti (9), tandis que la pièce en étrier (12) de chaque chariot est actionnable verticalement par un vérin (18) solidaire du chariot.

5. Machine selon l'une des revendications 1 à 4, caractérisée en ce que chaque pièce en forme d'étrier (12) est verrouillable sur le montant vertical précité (16) par l'intermédiaire d'une came excentrée (21) coopérant avec ladite pièce et associée à un moyen de blocage (26, 27), tel qu'un frein à disque par exemple.

6. Machine selon l'une des revendications précédentes, caractérisée en ce que chaque pièce formant étrier (12) est constamment sollicitée en position basse par un ressort ou analogue (29) attelé directement ou non à la came excentrée (21) précitée.

7. Machine selon l'une des revendications précédentes, caractérisée par au moins une butée réglable (30) associée au vérin (19) de commande en translation horizontale de chaque chariot (13) pour permettre son réglage en position horizontale, ainsi que par au moins une autre butée réglable (31) au niveau de la came excentrée (21).

8. Machine selon l'une des revendications précédentes, caractérisée en ce que la came excentrée (21) est portée à l'extrémité d'un axe (23) tourillonnant sur le chariot (13) et dont l'autre extrémité est cannelée (24) et porte un manchon (25) auquel est associé un disque (26) coopérant avec un corps de frein (27) solidaire du chariot, tandis que la butée (31) citée en dernier lieu coopère axialement avec ledit manchon (25).

9. Machine selon l'une des revendications précédentes, caractérisée par des moyens (33, 34) de butée réglables, tels que vis ou analogues, agencés de préférence au niveau de chaque galet (10, 10a, 11, 11a) entre le chariot (13) et la pièce en forme d'étrier (12) qui lui est associée, de façon à encaisser les réactions latérales du rail (5) sur chaque galet.

10. Machine selon l'une des revendications précédentes, caractérisée en ce que tous les galets obliques (10, 10a, 11, 11a) associés à chaque fraise (2, 6) et soutenant la partie inférieure du champignon (4) du rail sont inclinés d'environ 45° par rapport à la verticale, tandis que la fraise (2) attaquant la partie supérieure (3) du champignon est inclinée d'environ 20° par rapport à la verticale.

11. Machine selon l'une des revendications précédentes, caractérisée en ce que la partie d'attaque tangentielle de chaque fraise est pourvue d'une pluralité de plaquettes (2a, 6a) rapportées en carbure.

12. Machine selon l'une des revendications précédentes, caractérisée en ce que notamment, en amont et en aval de l'ensemble des deux fraises (2, 6), on prévoit un train de galets (40) d'entraînement du rail à reprofiler, au moins les galets (40a) situés en amont de la première fraise (2) et au dessus du rail (5) étant réglables en hauteur.

**_Fig:1_**

**_Fig:2_**

**_Fig:3_**

0148089

2/3

Fig.5

Fig.7

Fig.6

0148089

Fig. 5